(19) Europäisches Patentamt
European Patent Office
Office européen des brevets

(11) **EP 4 621 110 A1**

(12) **EUROPEAN PATENT APPLICATION**
published in accordance with Art. 153(4) EPC

(43) Date of publication:
**24.09.2025 Bulletin 2025/39**

(21) Application number: **23954035.4**

(22) Date of filing: **11.12.2023**

(51) International Patent Classification (IPC):
*C25F 3/02* (2006.01)      *H01M 4/66* (2006.01)
*H01M 4/80* (2006.01)

(52) Cooperative Patent Classification (CPC):
**C25F 3/02; H01M 4/66; H01M 4/80**

(86) International application number:
**PCT/CN2023/137987**

(87) International publication number:
**WO 2025/065902 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **28.09.2023   CN 202311278003**

(71) Applicant: **Contemporary Amperex Technology Co., Limited**
**Ningde, Fujian 352100 (CN)**

(72) Inventors:
• **LI, Zun**
**Ningde, Fujian 352100 (CN)**
• **WANG, Manman**
**Ningde, Fujian 352100 (CN)**
• **GE, Xiaoming**
**Ningde, Fujian 352100 (CN)**
• **OUYANG, Chuying**
**Ningde, Fujian 352100 (CN)**

(74) Representative: **Kraus & Lederer PartGmbB**
**Thomas-Wimmer-Ring 15**
**80539 München (DE)**

(54) **THREE-DIMENSIONAL POROUS COPPER AND PREPARATION METHOD THEREFOR**

(57)    The present application discloses three-dimensional porous copper and a preparation method therefor. The preparation method for the three-dimensional porous copper comprises the following steps: providing a copper alloy matrix, wherein the copper alloy matrix comprises a Cu element and a non-Cu metallic element, and the standard electrode potential of the non-Cu metallic element is less than that of the Cu element; providing a corrosive liquid, wherein the corrosive liquid comprises a neutral salt, a weakly acidic complexing agent, and a solvent, the molar concentration of the neutral salt is recorded as C1, the molar concentration of the weakly acidic complexing agent is recorded as C2, the molar concentrations are both in the unit of mol/L, $0.04 \leq C2/C1 \leq 0.60$, and C2 is less than or equal to 0.20 mol/L; and using the corrosive liquid as an electrolyte to perform electrochemical corrosion on the copper alloy matrix so as to obtain three-dimensional porous copper. The present application can improve the porosity of three-dimensional porous copper and can also reduce cracks in the three-dimensional porous copper.

FIG. 1

**Description**

CROSS-REFERENCE TO RELATED APPLICATION

The present application claims priority to Chinese Patent Application No. 202311278003.7 filed on September 28, 2023, and entitled "THREE-DIMENSIONAL POROUS COPPER AND PREPARATION METHOD THEREFOR", the content of which is incorporated herein by reference in its entirety.

TECHNICAL FIELD

The present application relates to a three-dimensional porous copper and a preparation method therefor.

BACKGROUND

In recent years, batteries have been widely used in energy storage power systems such as hydropower, thermal power, wind power, and solar power stations, as well as in various fields such as consumer electronics, electric tools, electric bicycles, electric motorcycles, electric vehicles, military equipment, and aerospace. The negative electrode is an important component of a battery and it will affect the performance of the battery. At present, the negative electrode of a battery is generally formed by providing a negative electrode film layer including a negative electrode active material such as graphite on a copper foil. However, with the continuous expansion of battery applications, the demand for batteries with high energy density is increasing. Metal batteries and negative electrode-free batteries can have high energy density due to the absence of negative electrode film layers. However, problems of uneven metal deposition and dendrite formation hinder the development of metal batteries and negative electrode-free batteries. The negative electrode current collector is an important component of metal batteries and negative electrode-free batteries, and improving the negative electrode current collector is expected to mitigate the problems of uneven metal deposition and dendrite formation.

Three-dimensional porous copper has the advantages of low weight, large specific surface area, and the like. When the three-dimensional porous copper is applied to a battery, the energy density of the battery can be improved, and the reliability of the battery can also be improved. Particularly, when the three-dimensional porous copper is applied to metal batteries and negative electrode-free batteries, the use of a three-dimensional porous copper structure as the negative electrode can also mitigate the problems of uneven metal deposition and dendrite formation. Electrochemical corrosion (i.e., electrochemical dealloying) on copper alloy substrates is an effective method for preparing three-dimensional porous copper structures. At present, the three-dimensional porous copper structures prepared by a dealloying process have the problems such as low porosity and numerous surface cracks, which affect the performance of batteries when the three-dimensional porous copper structures are applied to battery current collectors.

The above statements are only used to provide background information related to the present application and do not necessarily constitute the prior art.

SUMMARY

The present application provides a three-dimensional porous copper and a preparation method therefor, which can improve the porosity of the three-dimensional porous copper and also reduce cracks in the three-dimensional porous copper.

A first aspect of the present application provides a preparation method for a three-dimensional porous copper. The preparation method includes the following steps: providing a copper alloy substrate, where the copper alloy substrate includes a Cu element and a non-Cu metallic element, and the standard electrode potential of the non-Cu metallic element is smaller than the standard electrode potential of the Cu element; providing a corrosive solution, where the corrosive solution includes a neutral salt, a weakly acidic complexing agent, and a solvent, the molar concentration of the neutral salt is recorded as C1, the molar concentration of the weakly acidic complexing agent is recorded as C2, and both molar concentrations are expressed in mol/L, where $0.04 \leq C2/C1 \leq 0.60$, and $C2 \leq 0.20$ mol/L; and performing electrochemical corrosion on the copper alloy substrate with the corrosive solution as an electrolyte to obtain the three-dimensional porous copper.

The corrosive solution provided in the embodiments of the present application can provide a stable corrosive environment and can reduce the precipitation reaction of metal ions dissolved out during the electrochemical dealloying, thus reducing the problems of pore blockage and surface passivation of the prepared three-dimensional porous copper and thereby improving the porosity of the prepared three-dimensional porous copper structure. Meanwhile, the formation of cracks can also be reduced.

The three-dimensional porous copper obtained by the preparation method provided in the embodiments of the present application can have high porosity and fewer cracks, so that when the three-dimensional porous copper is applied to a battery current collector, the electrochemical performance of a battery can be improved.

In some embodiments, $0.10 \leq C2/C1 \leq 0.24$. By further adjusting C2/C1 within the above range, the porosity of the prepared three-dimensional porous copper structure can be further improved, and the formation of cracks can also be reduced.

In some embodiments, C1 is 0.2 mol/L to 2.0 mol/L, optionally 0.5 mol/L to 1.5 mol/L. By further adjusting the molar concentration of the neutral salt C1 within the above range, the reaction rate of electrochemical dealloying can be improved, the porosity of the prepared three-dimensional porous copper structure is improved, and the formation of cracks can also be reduced.

In some embodiments, C2 is 0.04 mol/L to 0.20 mol/L, optionally 0.08 mol/L to 0.16 mol/L. By further adjusting the molar concentration of the weakly acidic complexing agent C2 within the above range, the problems of pore blockage and surface passivation of the prepared three-dimensional porous copper can be further reduced, the porosity of the prepared three-dimensional porous copper structure is improved, and the formation of hydrogen embrittlement cracks can also be reduced.

In some embodiments, the neutral salt includes one or more of a sodium salt, a potassium salt, and optionally includes one or more of sodium chloride and potassium chloride.

In some embodiments, the weakly acidic complexing agent includes one or more of a dicarboxylic acid, a polycarboxylic acid, and respective salts thereof, and optionally includes one or more of citric acid, isocitric acid, malic acid, tartaric acid, oxalic acid, malonic acid, succinic acid, glutaric acid, maleic acid, fumaric acid, and respective salts thereof; optionally, the salt includes one or more of a sodium salt, a potassium salt, a sodium potassium salt, and an ammonium salt.

By further adjusting the weakly acidic complexing agent within the above range, the porosity of the prepared three-dimensional porous copper structure can be further improved, and the formation of cracks can also be reduced.

In some embodiments, the solvent includes water.

In some embodiments, a three-electrode system is employed to perform electrochemical corrosion on the copper alloy substrate with the corrosive solution as the electrolyte, the copper alloy substrate serves as the working electrode, an AgCl/Ag electrode serves as the reference electrode, and a platinum electrode serves as the counter electrode.

In some embodiments, the voltage between the copper alloy substrate and the reference electrode is -0.70 V to -0.15 V.

In some embodiments, the temperature for the electrochemical corrosion on the copper alloy substrate with the corrosive solution as the electrolyte is 10 °C to 65 °C, optionally 20 °C to 35 °C.

In some embodiments, the time for the electrochemical corrosion on the copper alloy substrate with the corrosive solution as the electrolyte is 3 h to 24 h, optionally 6 h to 10 h.

In some embodiments, the copper alloy substrate is in the form of a sheet or a foil.

In some embodiments, the non-Cu metallic element includes one or more of Mn, Zn, Ni, Al, and Fe.

In some embodiments, the preparation method further includes a step of rinsing the copper alloy substrate with the corrosive solution.

In some embodiments, the preparation method further includes a step of performing water washing, alcohol washing, and drying on the three-dimensional porous copper after the electrochemical corrosion. The water washing can remove soluble salts in the three-dimensional porous copper structure, and the alcohol washing can remove residual moisture in the three-dimensional porous copper structure.

In some embodiments, the atomic percentage of the non-Cu metallic element in the copper alloy substrate is no less than 65 at.%, optionally 65 at.% to 80 at.%. Therefore, when the prepared three-dimensional porous copper is applied to a battery current collector, the electrochemical performance of the battery can be better improved.

A second aspect of the present application provides a three-dimensional porous copper. The three-dimensional porous copper is obtained by the preparation method of the first aspect.

In some embodiments, the pore diameter of the three-dimensional porous copper is 0.3 μm to 20 μm, optionally 2 μm to 8 μm.

In some embodiments, the ligament width of the three-dimensional porous copper is 0.5 μm to 20 μm, optionally 2 μm to 8 μm.

In some embodiments, the non-Cu metal residual level of the three-dimensional porous copper is less than or equal to 5 at.%, optionally less than or equal to 2 at.%.

BRIEF DESCRIPTION OF THE DRAWINGS

FIG. 1 illustrates a scanning electron microscope (SEM) image of a three-dimensional porous copper prepared in Example 1.

FIG. 2 illustrates a scanning electron microscope (SEM) image of a three-dimensional porous copper prepared in Example 13.

FIG. 3 illustrates a scanning electron microscope (SEM) image of a three-dimensional porous copper prepared in Example 16.

FIG. 4 illustrates a scanning electron microscope (SEM) image of a three-dimensional porous copper prepared in Comparative Example 1.

FIG. 5 illustrates a scanning electron microscope (SEM) image of a three-dimensional porous copper prepared in Comparative Example 2.

FIG. 6 illustrates a scanning electron microscope (SEM) image of a three-dimensional porous copper prepared in Comparative Example 3.

FIG. 7 illustrates a scanning electron microscope (SEM) image of a three-dimensional porous copper prepared in Comparative Example 4.

FIG. 8 illustrates a scanning electron microscope (SEM) image of a three-dimensional porous copper prepared in Comparative Example 5.

FIG. 9 illustrates a scanning electron microscope (SEM) image of a three-dimensional porous copper prepared in Comparative Example 6.

DETAILED DESCRIPTION

Hereinafter, embodiments of the three-dimensional porous copper and the preparation method therefor according to the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

In the present application, the terms "a plurality of" and "multiple" mean two or more.

In the description of the embodiments of the present application, unless otherwise specified, a first feature being "above" or "below" a second feature may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or simply mean that the first feature is at a higher horizontal level than the second feature. A first feature being "under", "below", and "beneath" a second feature may be that the first feature is right under or obliquely under the second feature, or may simply mean that the first feature is at a lower horizontal level than the second feature.

Unless otherwise specified, the terms used in the present application have well-known meanings that are commonly understood by those skilled in the art.

Unless otherwise specified, the values of the parameters mentioned in the present application can be measured by various test methods commonly used in the art. For example, they can be measured according to the test methods given in the examples of the present application. Unless otherwise specified, all parameters are tested at 25 °C.

The embodiments of the present application provide a preparation method for a three-dimensional porous copper.

The preparation method includes the following steps: providing a copper alloy substrate, where the copper alloy substrate includes a Cu element and a non-Cu metallic element, and the standard electrode potential of the non-Cu metallic element is smaller than the standard electrode potential of the Cu element; providing a corrosive solution, where the corrosive solution includes a neutral salt, a weakly acidic complexing agent, and a solvent, the molar concentration of the neutral salt is recorded as $C1$, the molar concentration of the weakly acidic complexing agent is recorded as $C2$, and both molar concentrations are expressed in mol/L, where $0.04 \leq C2/C1 \leq 0.60$, and $C2 \leq 0.20$ mol/L; and performing electrochemical corrosion on the copper alloy substrate with the corrosive solution as an electrolyte to obtain the three-dimensional porous copper.

At present, when a three-dimensional porous copper structure is prepared by a dealloying process, the corrosive solution adopted is mainly a strongly acidic (such as hydrochloric acid, sulfuric acid, nitric acid, phosphoric acid, or acetic acid) solution, a strongly alkaline (such as sodium hydroxide or potassium hydroxide) solution, a neutral salt (such as sodium chloride) solution, or a mixed solution of a strong acid and a neutral salt. However, all of the above corrosive solutions have certain defects.

When the corrosive solution is a strongly alkaline solution or a neutral salt solution, the acid-base property of the corrosive solution is not easy to control, so that metal ions dissolved out from the copper alloy substrate are easily formed into solid metal compound particles and adsorbed on the surface of the formed three-dimensional porous copper structure. This may easily lead to the problems of pore blockage and surface passivation, thereby causing the porosity of the prepared three-dimensional porous copper structure to be significantly lower than the theoretical value (i.e., the theoretical value of the porosity after complete dealloying of the copper alloy substrate). In addition, since the surface of the three-dimensional porous copper structure is covered with the solid metal compound particles, the presence of the solid metal compound particles may also hinder further modification of the three-dimensional porous copper structure. For example, the lithiophilic treatment of the three-dimensional porous copper structure may be hindered, and when the three-dimensional porous copper structure is applied to a battery, it is difficult to effectively improve the performance of the battery.

When the corrosive solution is a strongly acidic solution or a mixed solution of a strong acid and a neutral salt, the prepared three-dimensional porous copper structure is prone to cracks during electrochemical corrosion, and when the three-dimensional porous copper structure is applied to a battery, the crack structure easily aggravates uneven metal deposition, affecting the performance of the battery.

The corrosive solution provided in the embodiments of the present application includes a neutral salt and a weakly acidic complexing agent, and the molar concentration of the neutral salt $C1$ and the molar concentration of the weakly acidic complexing agent $C2$ further satisfy the following conditions: $0.04 \leq C2/C1 \leq 0.60$, and $C2 \leq 0.20$ mol/L.

During the electrochemical dealloying, the non-Cu metal in the copper alloy substrate loses electrons, the electrons flow to the counter electrode through an external circuit, and hydrogen ions near the counter electrode obtain the electrons to generate hydrogen. Meanwhile, the corrosive solution between the counter electrode and the working electrode serves as a conductive solution, ensuring unimpeded current by providing ionic conductivity.

The neutral salt in the corrosive solution does not participate in electrochemical reactions itself, and thus the concentration of the neutral salt can be maintained relatively stable during the electrochemical dealloying, and the electrochemical dealloying effect is not affected by variations in the concentration of the corrosive solution. As the molar concentration of the neutral salt $C1$ and the molar concentration of the weakly acidic complexing agent $C2$ satisfy the condition of $C2/C1 \leq 0.60$, the molar concentration of the neutral salt is higher than the molar concentration of the weakly acidic complexing agent, so that the working circuit for electrochemical dealloying can be provided with sufficient and stable ionic conductivity, ensuring unimpeded current of the working circuit.

The weakly acidic complexing agent can provide hydrogen ions for the reduction half-reaction on the counter electrode, thereby maintaining the weak acidity of the corrosive solution. With the consumption of hydrogen ions, a large number of free acid ions may also serve as complexing agents, so that the precipitation reaction of metal ions dissolved out during the dealloying can be reduced and even inhibited. In addition, the metal ions dissolved out during the dealloying can be complexed and the forward progression of the corrosion reaction can be promoted.

As the molar concentration of the neutral salt C1 and the molar concentration of the weakly acidic complexing agent C2 satisfy the condition of C2/C1 ≥ 0.04, the precipitation reaction of metal ions dissolved out during the electrochemical dealloying can be reduced. Thus, the problems of pore blockage and surface passivation can be reduced, and thereby the porosity of the prepared three-dimensional porous copper structure can be improved. During the electrochemical dealloying, hydrogen ions are continuously consumed by the counter electrode due to hydrogen evolution. When C2/C1 ≤ 0.04, the corrosive solution near the counter electrode is easily changed into alkalinity, and also, after the corrosive solution in this area diffuses to the vicinity of the working electrode, metal ions dissolved out from the copper alloy substrate are easily formed into solid metal compound particles and adsorbed on the surface of the formed three-dimensional porous copper structure. This will easily lead to the problems of pore blockage and surface passivation and thereby reduce the porosity of the prepared three-dimensional porous copper structure, with the porosity being usually significantly lower than the theoretical value.

The molar concentration of the weakly acidic complexing agent C2 is also required to be less than or equal to 0.20 mol/L, thereby reducing the formation of hydrogen embrittlement cracks. When the molar concentration of the weakly acidic complexing agent C2 is greater than 0.20 mol/L, the concentration of hydrogen ions at the dealloying interface is too high, such that an intense chemical dealloying reaction is likely to occur, thereby easily causing the formation of hydrogen embrittlement cracks.

Therefore, the corrosive solution provided in the embodiments of the present application can provide a stable corrosive environment and can reduce the precipitation reaction of metal ions dissolved out during the electrochemical dealloying, thus reducing the problems of pore blockage and surface passivation of the prepared three-dimensional porous copper and thereby improving the porosity of the prepared three-dimensional porous copper structure. Meanwhile, the formation of cracks can also be reduced.

The three-dimensional porous copper obtained by the preparation method provided in the embodiments of the present application can have high porosity and fewer cracks, so that when the three-dimensional porous copper is applied to a battery current collector, the electrochemical performance of a battery can be improved.

C2/C1 may be 0.04, 0.06, 0.08, 0.10, 0.12, 0.14, 0.16, 0.18, 0.20, 0.24, 0.30, 0.40, 0.50, 0.60, or a range formed by any of the values described above. In some embodiments, optionally, $0.06 \leq C2/C1 \leq 0.40$, $0.08 \leq C2/C1 \leq 0.30$, $0.10 \leq C2/C1 \leq 0.24$, $0.10 \leq C2/C1 \leq 0.20$, and $0.10 \leq C2/C1 \leq 0.16$.

By further adjusting C2/C1 within the above range, the porosity of the prepared three-dimensional porous copper structure can be further improved, and the formation of cracks can also be reduced.

In some embodiments, the molar concentration of the weakly acidic complexing agent C2 may be 0.04 mol/L to 0.20 mol/L, for example, may be 0.04 mol/L, 0.05 mol/L, 0.06 mol/L, 0.07 mol/L, 0.08 mol/L, 0.09 mol/L, 0.10 mol/L, 0.11 mol/L, 0.12 mol/L, 0.13 mol/L, 0.14 mol/L, 0.15 mol/L, 0.16 mol/L, 0.17 mol/L, 0.18 mol/L, 0.19 mol/L, 0.20 mol/L, or a range formed by any of the values described above. Optionally, the molar concentration of the weakly acid complexing agent C2 may be 0.08 mol/L to 0.16 mol/L.

By further adjusting the molar concentration of the weakly acidic complexing agent C2 within the above range, the problems of pore blockage and surface passivation of the prepared three-dimensional porous copper can be further reduced, the porosity of the prepared three-dimensional porous copper structure is improved, and the formation of hydrogen embrittlement cracks can also be reduced.

In some embodiments, the molar concentration of the neutral salt C1 may be 0.2 mol/L to 2.0 mol/L, for example, may be 0.2 mol/L, 0.3 mol/L, 0.4 mol/L, 0.5 mol/L, 0.6 mol/L, 0.7 mol/L, 0.8 mol/L, 0.9 mol/L, 1.0 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, 2.0 mol/L, or a range formed by any of the values described above, Optionally, the molar concentration of the neutral salt C1 may be 0.5 mol/L to 1.5 mol/L.

By further adjusting the molar concentration of the neutral salt C1 within the above range, the reaction rate of electrochemical dealloying can be improved, the porosity of the prepared three-dimensional porous copper structure is improved, and the formation of cracks can also be reduced.

In some embodiments, the copper alloy substrate may be in the form of a sheet or a foil.

The copper alloy substrate includes a Cu element and a non-Cu metallic element. The atomic mass ratio of the Cu element to the non-Cu metallic element is not specifically limited and can be adjusted according to the required porosity of the three-dimensional porous copper structure.

In some embodiments, the atomic percentage of the non-Cu metallic element in the copper alloy substrate may be no less than 65 at.%, optionally 65 at.% to 80 at.%, more optionally 70 at.% to 75 at.%. Therefore, when the prepared three-dimensional porous copper is applied to a battery current collector, the electrochemical performance of the battery can be better improved.

In some embodiments, the non-Cu metallic element in the copper alloy substrate may include one or more of Mn, Zn, Ni, Al, and Fe.

In some embodiments, the copper alloy substrate may also include a non-metallic element, such as C and Si.

The copper alloy substrate may be commercially available or may be prepared according to methods known in the art, for example, through a smelting method.

In some embodiments, the molar amount of the weakly acidic complexing agent in the corrosive solution may be 2 times or more, optionally 2-8 times, the molar amount of the non-Cu metallic element in the copper alloy substrate.

In some embodiments, the neutral salt in the corrosive solution may include one or more of a sodium salt and a potassium salt, and optionally include one or more of sodium chloride and potassium chloride.

The complexing action of the weakly acidic complexing agent generally means that the weakly acidic complexing agent can complex the non-Cu metal ions dissolved out from the copper alloy substrate. In some embodiments, the weakly acidic complexing agent in the corrosive solution may include one or more of a dicarboxylic acid, a polycarboxylic acid, and respective salts thereof.

Optionally, the weakly acidic complexing agent in the corrosive solution may include one or more of citric acid, isocitric acid, malic acid, tartaric acid, oxalic acid, malonic acid, succinic acid, glutaric acid, maleic acid, fumaric acid, and respective salts thereof.

Optionally, the salts of the above dicarboxylic acids and polycarboxylic acids may include one or more of a sodium salt, a potassium salt, a sodium-potassium salt, and an ammonium salt.

By further adjusting the weakly acidic complexing agent within the above range, the porosity of the prepared three-dimensional porous copper structure can be further improved, and the formation of cracks can also be reduced.

In some embodiments, the solvent in the corrosive solution may include water, such as deionized water and pure water.

In some embodiments, when a three-electrode system may be employed to perform electrochemical corrosion on the copper alloy substrate with the corrosive solution as the electrolyte, the copper alloy substrate serves as the working electrode, the AgCl/Ag electrode serves as the reference electrode, and the platinum electrode serves as the counter electrode.

In some embodiments, the voltage between the copper alloy substrate and the reference electrode may be -0.70 V to -0.15 V.

In some embodiments, the temperature for the electrochemical corrosion on the copper alloy substrate with the corrosive solution as the electrolyte may be 10 °C to 65 °C, optionally 20 °C to 35 °C.

In some embodiments, the time for the electrochemical corrosion on the copper alloy substrate with the corrosive solution as the electrolyte may be 3 h to 24 h, optionally 6 h to 10 h.

In some embodiments, the preparation method may further include a step of rinsing the copper alloy substrate with the corrosive solution.

In some embodiments, the preparation method may further include a step of performing water washing, alcohol washing, and drying on the three-dimensional porous copper after the electrochemical corrosion. The water washing can remove soluble salts in the three-dimensional porous copper structure, and the alcohol washing can remove residual moisture in the three-dimensional porous copper structure.

The number of times of water washing and alcohol washing is not specifically limited, and the washing time is also not specifically limited.

Optionally, absolute ethanol may be used for the alcohol washing.

The embodiments of the present application further provide a three-dimensional porous copper obtained by the preparation method described above.

In some embodiments, the pore diameter of the three-dimensional porous copper may be 0.3 $\mu$m to 20 $\mu$m, optionally 2 $\mu$m to 8 $\mu$m.

In some embodiments, the ligament width of the three-dimensional porous copper may be 0.5 $\mu$m to 20 $\mu$m, optionally 2 $\mu$m to 8 $\mu$m.

In some embodiments, the non-Cu metal residual level (atomic percentage) of the three-dimensional porous copper may be less than or equal to 5 at.%, optionally less than or equal to 2 at.%.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on weight, and all reagents used in the examples are commercially available or synthesized according to conventional methods and can be used directly without further treatment, and the instruments used in the examples are all commercially available.

**Preparation of copper alloy substrates**

The Mn75Cu25 alloy was prepared according to a feeding ratio of Mn:Cu = 75:25 (at.%), and the smelting method was vacuum induction smelting. The CuMn alloy prepared by smelting was cut into alloy blocks with a thickness of 3 mm. The alloy blocks were cold-rolled to a thickness of about 0.25 mm and then annealed in an argon atmosphere at an annealing temperature of 400 °C to 700 °C for 6 h.

The above annealed CuMn alloy was cut into alloy sheets with a size of 32.0 mm × 25.0 mm. The surfaces of the CuMn alloy sheets were polished to be glossy with 400-grit, 800-grit, 1200-grit, and 2000-grit sandpaper and then the CuMn alloy sheets were each ultrasonically cleaned in 200 mL of deionized water and 200 mL of ethanol for 20 s each, followed by vacuum baking at 25 °C for 1 h to obtain the CuMn alloy sheets with clean and bright surfaces.

**Example 1**

NaCl and citric acid were weighed and added to 400 g of deionized water in batches, with continuous stirring until complete dissolution. The solution was then transferred to a 500 mL volumetric flask, and deionized water was added to bring the volume up to 500 mL to obtain a corrosive solution. The concentration of NaCl was 1 mol/L, and the concentration of citric acid was 0.12 mol/L.

A platinum electrode (a counter electrode), an AgCl/Ag reference electrode, a platinum electrode holder, and an electrolysis cell were each rinsed with 300 mL of deionized water, and the residual moisture was removed with dust-free paper. Then, the above components were each rinsed 3 times with 50 mL of the corrosive solution, and the remaining 300 mL of the corrosive solution was transferred to a corrosion cell.

The CuMn alloy sheet was fixed onto the platinum electrode holder. The electrodes were arranged in the following order: the platinum electrode holder (the working electrode), the AgCl/Ag reference electrode, and the platinum electrode (the counter electrode). All electrodes were positioned at the same height, i.e., approximately at 1/2 height of the electrolytic cell. The above three electrodes were connected to an electrochemical workstation to allow the CuMn alloy sheet and the platinum electrode to form a working circuit and allow the CuMn alloy sheet and the AgCl/Ag reference electrode to form a reference circuit.

During the electrochemical dealloying, a constant potential method was employed, the voltage difference between the CuMn alloy sheet and the AgCl/Ag reference electrode was - 0.2 V, and the corrosion time was set to be 8 h. After the corrosion reaction was completed, the CuMn alloy sheet turned from silver-white to copper-colored.

The above three-dimensional porous copper sheet was removed and soaked three times with 200 mL of deionized water for 10 min each to wash away residual soluble salts in the three-dimensional porous copper sheet; subsequently, the above three-dimensional porous copper sheet was soaked twice with 100 mL of absolute ethanol for 5 min each to wash away residual moisture in the three-dimensional porous copper sheet; finally, the three-dimensional porous copper sheet was transferred to a vacuum drying oven and baked at 30 °C under -0.1 Mpa for 4 h.

**Examples** 2-17

The preparation method for a three-dimensional porous copper sheet was similar to that in Example 1, except that the composition and/or concentration of the corrosive solution were different. Specific parameters are detailed in Table 1.

**Comparative Examples 1-6**

The preparation method for a three-dimensional porous copper sheet was similar to that in Example 1, except that the composition and/or concentration of the corrosive solution were different. Specific parameters are detailed in Table 1. In Table 1, / indicates that the corresponding component was not added to the corrosive solution.

<u>**Performance Testing**</u>

(1) Surface morphology test of three-dimensional porous copper sheet
The surface morphology of the three-dimensional porous copper sheet was tested by a scanning electron microscope. The test instrument might be ZEISS sigma 300.

(2) Mn residual level test of three-dimensional porous copper sheet
inductively coupled plasma atomic emission spectrometry (ICP)

The atomic percentage of the residual Mn of the three-dimensional porous copper sheet was tested using .

(3) Porosity test of three-dimensional porous copper sheet

The length, width, and thickness of the three-dimensional porous copper sheet were measured using a spiral micrometer, and the mass of the three-dimensional porous copper sheet was weighed using an analytical balance. To reduce measurement errors, three different areas could be selected for measuring the length and the width of the three-dimensional porous copper sheet, and an average value was taken; five different areas could be selected for measuring the thickness of the three-dimensional porous copper sheet, and an average value was taken; the mass of the three-dimensional porous copper sheet could be weighed three times, and an average value was taken.

The porosity of the three-dimensional porous copper sheet is:

$$P = \left[1 - \frac{1000 \times m/(a \times b \times h)}{\rho_{Cu}}\right] \times 100\%.$$

P: the porosity of the three-dimensional porous copper sheet.
M: the average mass value of the three-dimensional porous copper sheet, in unit of g.
a: the average length value of the three-dimensional porous copper sheet, in unit of mm.
b: the average width value of the three-dimensional porous copper sheet, in unit of mm.
h: the average thickness value of the three-dimensional porous copper sheet, in unit of mm.
$\rho$: the true density of pure copper, in unit of g/cm$^3$.
The test results are shown in Table 1.

Table 1

| No. | Corrosive solution | | | | | Three-dimensional porous copper sheet | | |
| | Neutral salt | | Weakly acidic complexing agent | | C2/C1 | Surface morphology | Mn residual level (at.%) | Porosity (%) |
| | Type | Concentration C1 (mol/L) | Type | Concentration C2 (mol/L) | | | | |
| Example 1 | NaCl | 1.0 | Citric acid | 0.12 | 0.120 | Porous structure with no significant surface cracks and solid particles | 1.1 | 73.5 |
| Example 2 | NaCl | 0.2 | Citric acid | 0.12 | 0.600 | Porous structure with no significant surface cracks and solid particles | 1.4 | 72.2 |
| Example 3 | NaCl | 0.5 | Citric acid | 0.12 | 0.240 | Porous structure with no significant surface cracks and solid particles | 1.3 | 72.3 |

(continued)

| No. | Corrosive solution | | | | | Three-dimensional porous copper sheet | | |
| | Neutral salt | | Weakly acidic complexing agent | | C2/C1 | Surface morphology | Mn residual level (at.%) | Porosity (%) |
| | Type | Concentration C1 (mol/L) | Type | Concentration C2 (mol/L) | | | | |
|---|---|---|---|---|---|---|---|---|
| Example 4 | NaCl | 1.5 | Citric acid | 0.12 | 0.080 | Porous structure with no significant surface cracks and solid particles | 1.5 | 71.3 |
| Example 5 | NaCl | 2.0 | Citric acid | 0.12 | 0.060 | Porous structure with no significant surface cracks and solid particles | 1.6 | 70.5 |
| Example 6 | NaCl | 1.0 | Citric acid | 0.04 | 0.040 | Porous structure with no significant surface cracks and solid particles | 1.9 | 73.0 |
| Example 7 | NaCl | 1.0 | Citric acid | 0.10 | 0.100 | Porous structure with no significant surface cracks and solid particles | 1.5 | 73.7 |
| Example 8 | NaCl | 1.0 | Citric acid | 0.16 | 0.160 | Porous structure with no significant surface cracks and solid particles | 1.6 | 72.8 |
| Example 9 | NaCl | 1.0 | Citric acid | 0.20 | 0.200 | Porous structure with no significant surface cracks and solid particles | 1.7 | 72.6 |

(continued)

| No. | Corrosive solution | | | | | Three-dimensional porous copper sheet | | |
|---|---|---|---|---|---|---|---|---|
| | Neutral salt | | Weakly acidic complexing agent | | C2/C1 | Surface morphology | Mn residual level (at.%) | Porosity (%) |
| | Type | Concentration C1 (mol/L) | Type | Concentration C2 (mol/L) | | | | |
| Example 10 | KCl | 1.0 | Citric acid | 0.12 | 0.120 | Porous structure with no significant surface cracks and solid particles | 2.0 | 72.5 |
| Example 11 | NaCl | 1.0 | Diammonium hydrogen citrate | 0.12 | 0.120 | Porous structure with no significant surface cracks and solid particles | 2.8 | 69.8 |
| Example 12 | NaCl | 1.0 | Monosodium Citrate | 0.12 | 0.120 | Porous structure with no significant surface cracks and solid particles | 2.2 | 71.8 |
| Example 13 | NaCl | 1.0 | Malic acid | 0.12 | 0.120 | Porous structure with no significant surface cracks and solid particles | 1.9 | 72.7 |
| Example 14 | NaCl | 1.0 | Isocitric acid | 0.12 | 0.120 | Porous structure with no significant surface cracks and solid particles | 1.2 | 73.8 |
| Example 15 | NaCl | 1.0 | Tartaric acid | 0.12 | 0.120 | Porous structure with no significant surface cracks and solid particles | 1.4 | 74.1 |

(continued)

| No. | Corrosive solution | | | | | Three-dimensional porous copper sheet | | |
|---|---|---|---|---|---|---|---|---|
| | Neutral salt | | Weakly acidic complexing agent | | C2/C1 | Surface morphology | Mn residual level (at.%) | Porosity (%) |
| | Type | Concentration C1 (mol/L) | Type | Concentration C2 (mol/L) | | | | |
| Example 16 | NaCl | 1.0 | Fumaric acid | 0.12 | 0.120 | Porous structure with no significant surface cracks and solid particles | 1.8 | 73.4 |
| Example 17 | NaCl | 1.0 | Maleic acid | 0.12 | 0.120 | Porous structure with no significant surface cracks and solid particles | 1.7 | 72.9 |
| Comparative Example 1 | NaCl | 1.0 | Citric acid | 0.01 | 0.010 | Surface covered with solid particles | 18.6 | 57.7 |
| Comparative Example 2 | / | / | Citric acid | 0.12 | / | Surface cracks | 25.9 | 51.2 |
| Comparative Example 3 | NaCl | 1.0 | Acetic acid | 0.12 | 0.120 | Surface covered with solid particles | 21.2 | 55.7 |
| Comparative Example 4 | NaCl | 0.05 | Citric acid | 0.12 | 2.400 | Surface cracks | 17.8 | 53.2 |
| Comparative Example 5 | NaCl | 2.5 | Citric acid | 0.10 | 0.032 | Surface cracks | 1.5 | 70.8 |
| Comparative Example 6 | NaCl | 1.0 | Citric acid | 0.30 | 0.300 | Surface cracks | 1.3 | 72.2 |

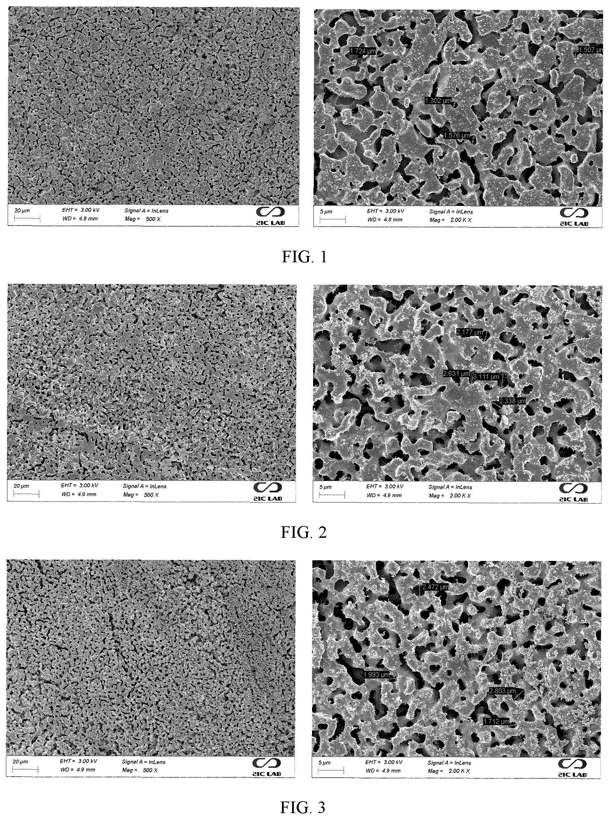

As can be seen from the test results in Table 1, by adjusting the corrosive solution to include a neutral salt and a weakly acidic complexing agent and adjusting the molar concentration of the neutral salt C1 and the molar concentration of the weakly acidic complexing agent C2 to satisfy the conditions of $0.04 \leq C2/C1 \leq 0.60$ and $C2 \leq 0.20$ mol/L, a stable corrosive environment can be provided, such that the precipitation reaction of manganese ions dissolved out during the electrochemical dealloying can be reduced, thus reducing the problems of pore blockage and surface passivation of the prepared three-dimensional porous copper can be reduced and thereby improving the porosity of the prepared three-dimensional porous copper sheet. Meanwhile, the formation of cracks can also be reduced. As can be seen from FIGs. 1 to 3, the prepared three-dimensional porous copper sheet has high porosity, and meanwhile, on the surface of the prepared three-dimensional porous copper sheet, there is no coverage by significant solid metal compound particles or formation of significant cracks (no cracks with a width of 5 $\mu$m or more).

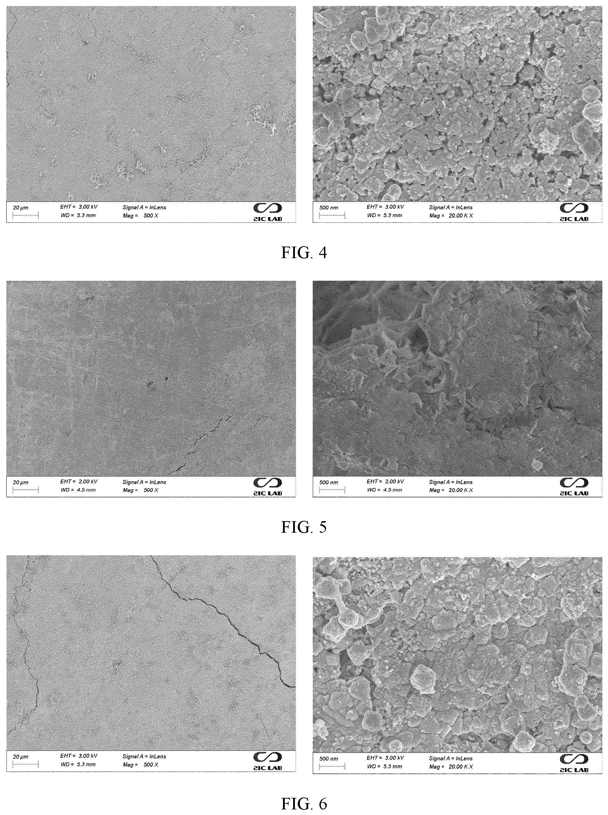

In Comparative Example 1, the molar ratio C2/C1 of the weakly acidic complexing agent to the neutral salt in the corrosive solution prepared is very small, and the molar concentration of the weakly acidic complexing agent C2 in the corrosive solution is also relatively low. In this case, the weakly acidic complexing agent cannot fully perform its functions of maintaining the acidity of the electrolyte and complexing manganese ions. In addition, during the electrochemical dealloying, hydrogen ions are continuously consumed by the counter electrode due to hydrogen evolution, and the corrosive solution near the counter electrode is easily changed into alkalinity. As a result, manganese ions dissolved out from the copper alloy substrate are easily formed into solid metal compound particles and adsorbed on the surface of the formed three-dimensional porous copper. This will easily lead to the problems of pore blockage and surface passivation and thereby reduce the porosity of the prepared three-dimensional porous copper sheet as well. As can be seen from FIG. 4, the prepared three-dimensional porous copper sheet has low porosity, and meanwhile, the surface of the prepared three-dimensional porous copper sheet is also covered with numerous solid metal compound particles.

In Comparative Example 2, a citric acid solution is used as the corrosive solution. Since the citric acid itself participates in the chemical dealloying reaction, the concentration of the citric acid solution will be continuously reduced during the dealloying. This will affect the ionic conductivity and the dealloying effect of the corrosive solution, thereby reducing the porosity of the three-dimensional porous copper sheet. Meanwhile, when the citric acid solution is used as the corrosive solution, the electrochemical dealloying rate is relatively slow while the chemical dealloying rate is relatively fast, leading to the formation of cracks easily. As can be seen from FIG. 5, the prepared three-dimensional porous copper sheet has low porosity, and meanwhile, cracks are formed on the surface of the prepared three-dimensional porous copper sheet.

In Comparative Example 3, a neutral salt and an acetic acid solution are used as the corrosive solution. Since acetic acid is a monobasic acid, it enables dissociation of fewer hydrogen ions at the same molar concentration. Meanwhile, the acetic acid itself has no effect of complexing manganese ions, and as a result, during the electrochemical dealloying, the manganese ions dissolved out from the copper alloy substrate are easily formed into solid metal compound particles and adsorbed on the surface of the formed three-dimensional porous copper. As can be seen from FIG. 6, the prepared three-dimensional porous copper sheet has low porosity, and meanwhile, the surface of the prepared three-dimensional porous copper sheet is also covered with numerous solid metal compound particles.

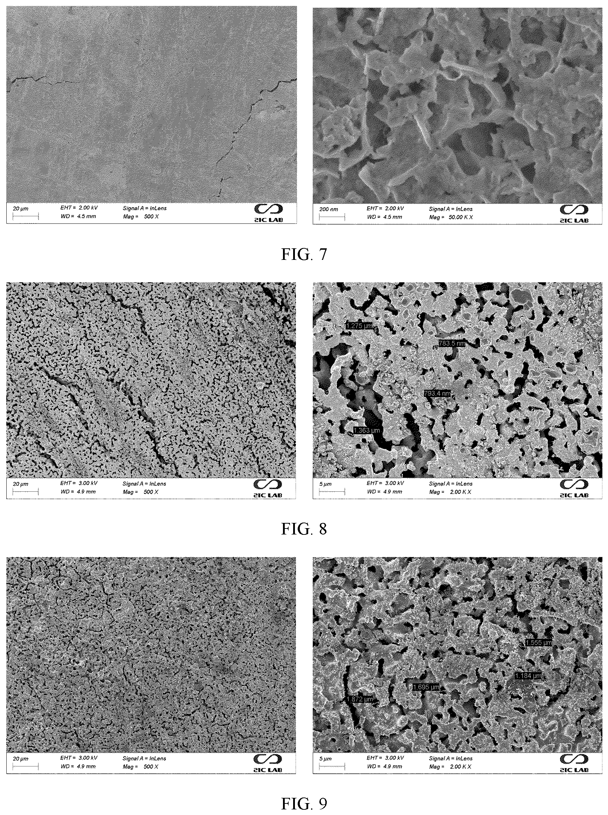

In Comparative Example 4, the molar ratio C2/C1 of the weakly acidic complexing agent to the neutral salt in the corrosive solution prepared is relatively high. In this case, the electrochemical dealloying reaction rate is relatively slow, and the dealloying of the copper alloy substrate is not thorough. Therefore, the porosity of the prepared three-dimensional porous copper sheet is relatively low. Meanwhile, the molar concentration of the neutral salt C1 in the corrosive solution is also relatively low, and the dealloying reaction of the copper alloy substrate is mainly a chemical corrosion reaction, leading to the formation of cracks easily. As can be seen from FIG. 7, the prepared three-dimensional porous copper sheet has low porosity, and meanwhile, cracks are formed on the surface of the prepared three-dimensional porous copper sheet.

In Comparative Example 5, the molar ratio C2/C1 of the weakly acidic complexing agent to the neutral salt in the corrosive solution prepared is relatively small, and the molar concentration of the neutral salt C1 is relatively high. In this case, the electrochemical dealloying reaction rate is relatively fast, relatively great stress is formed in the copper alloy substrate, and thereby significant cracks are present in the prepared three-dimensional porous copper sheet. As can be seen from FIG. 8, relatively large cracks are formed on the surface of the prepared three-dimensional porous copper sheet.

In Comparative Example 6, the molar concentration of the weakly acidic complexing agent C2 in the corrosive solution prepared is relatively high, which causes an intense chemical dealloying reaction and thus easily causes the formation of hydrogen embrittlement cracks. As can be seen from FIG. 9, relatively large cracks are formed on the surface of the prepared three-dimensional porous copper sheet.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1. A preparation method for a three-dimensional porous copper, comprising the following steps:

    providing a copper alloy substrate, wherein the copper alloy substrate comprises a Cu element and a non-Cu metallic element, and a standard electrode potential of the non-Cu metallic element is smaller than a standard electrode potential of the Cu element;
    providing a corrosive solution, wherein the corrosive solution comprises a neutral salt, a weakly acidic complexing agent, and a solvent, a molar concentration of the neutral salt is recorded as C1, a molar concentration of the weakly acidic complexing agent is recorded as C2, both molar concentrations are expressed in mol/L, $0.04 \leq C2/C1 \leq 0.60$, and $C2 \leq 0.20$ mol/L; and
    performing electrochemical corrosion on the copper alloy substrate with the corrosive solution as an electrolyte to obtain a three-dimensional porous copper.

2. The preparation method according to claim 1, wherein $0.10 \leq C2/C1 \leq 0.24$.

3. The preparation method according to any one of claims 1 to 2, wherein

   C1 is 0.2 mol/L to 2.0 mol/L, optionally 0.5 mol/L to 1.5 mol/L; and/or
   C2 is 0.04 mol/L to 0.20 mol/L, optionally 0.08 mol/L to 0.16 mol/L.

4. The preparation method according to any one of claims 1 to 3, wherein

   the neutral salt comprises one or more of a sodium salt and a potassium salt, and optionally comprises one or more of sodium chloride and potassium chloride; and/or
   the weakly acidic complexing agent comprises one or more of a dicarboxylic acid, a polycarboxylic acid, and respective salts thereof, and optionally comprises one or more of citric acid, isocitric acid, malic acid, tartaric acid, oxalic acid, malonic acid, succinic acid, glutaric acid, maleic acid, fumaric acid, and respective salts thereof; optionally, the salt comprises one or more of a sodium salt, a potassium salt, a sodium potassium salt, and an ammonium salt; and/or
   the solvent comprises water.

5. The preparation method according to any one of claims 1 to 4, wherein a three-electrode system is employed to perform electrochemical corrosion on the copper alloy substrate with the corrosive solution as the electrolyte, the copper alloy substrate serves as a working electrode, an AgCl/Ag electrode serves as a reference electrode, and a platinum electrode serves as a counter electrode.

6. The preparation method according to claim 5, wherein a voltage between the copper alloy substrate and the reference electrode is -0.70 V to -0.15 V.

7. The preparation method according to any one of claims 1 to 6, wherein

   a temperature for the electrochemical corrosion on the copper alloy substrate with the corrosive solution as the electrolyte is 10 °C to 65 °C, optionally 20 °C to 35 °C; and/or
   a time for the electrochemical corrosion on the copper alloy substrate with the corrosive solution as the electrolyte is 3 h to 24 h, optionally 6 h to 10 h.

8. The preparation method according to any one of claims 1 to 7, wherein

   the copper alloy substrate is in a form of a sheet or a foil; and/or
   the non-Cu metallic element comprises one or more of Mn, Zn, Ni, Al, and Fe.

9. The preparation method according to any one of claims 1 to 8, wherein the preparation method further comprises a step of rinsing the copper alloy substrate with the corrosive solution.

10. The preparation method according to any one of claims 1 to 9, wherein the preparation method further comprises a step of performing water washing, alcohol washing, and drying on the three-dimensional porous copper after the electrochemical corrosion.

11. The preparation method according to any one of claims 1 to 10, wherein an atomic percentage of the non-Cu metallic element in the copper alloy substrate is no less than 65 at.%, optionally 65 at.% to 80 at.%.

12. A three-dimensional porous copper obtained by the preparation method according to any one of claims 1 to 11.

13. The three-dimensional porous copper according to claim 12, wherein

   a pore diameter of the three-dimensional porous copper is 0.3 $\mu$m to 20 $\mu$m, optionally 2 $\mu$m to 8 $\mu$m; and/or
   a ligament width of the three-dimensional porous copper is 0.5 $\mu$m to 20 $\mu$m, optionally 2 $\mu$m to 8 $\mu$m; and/or
   a non-Cu metal residual level of the three-dimensional porous copper is less than or equal to 5 at.%, optionally less than or equal to 2 at.%.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/CN2023/137987** |

| A. | CLASSIFICATION OF SUBJECT MATTER |
|---|---|

C25F3/02(2006.01)i;  H01M4/66(2006.01)i;  H01M4/80(2006.01)i

According to International Patent Classification (IPC) or to both national classification and IPC

| B. | FIELDS SEARCHED |
|---|---|

Minimum documentation searched (classification system followed by classification symbols)

    IPC:C25F H01M

Documentation searched other than minimum documentation to the extent that such documents are included in the fields searched

Electronic data base consulted during the international search (name of data base and, where practicable, search terms used)

CNTXT, ENTXTC, VEN, ENTXT, CJFD, CNKI, web of science: 宁德时代, 李尊, 王慢慢, 葛销明, 欧阳楚英, 电化学, 电解, 去合金, 脱合金, 合金, 腐蚀, 蚀刻, 刻蚀, 中性盐, 氯化钠, 氯化钾, 氯化锂, 硫酸钠, 硫酸钾, 硫酸锂, 硝酸钠, 硝酸锂, 硝酸钾, LICL, KCL, NACL, NA2SO4, K2SO4, LI2SO4, LINO3, NANO3, KNO3, 二酸, 二羧酸, 柠檬酸, 苹果酸, 酒石酸, 草酸, 丙二酸, 丁二酸, 戊二酸, 马来酸, 富马酸, 多孔, 泡沫, 铜, electrochemical, electroly+, dealloy+, alloy, etch+, corro+, (chloride or nitrate or sulphate or sulfate) d (sodium or lithium or potassium), succinic, butanedioic, glutaric, glutarate, maleic, maleate, boletic, fumaric, tartaric, tartrate, oxalic, ethanedioic, diacid, dicarboxyl, malonic, malonate, propandioic, citric, citrate, lemon, isocitric, malic, porous, foam, cu, copper.

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2022250352 A1 (TSINGHUA UNIVERSITY et al.) 11 August 2022 (2022-08-11) entire document | 1-13 |
| A | CN 105845459 A (SICHUAN MEIJIABAO NEW ENERGY TECHNOLOGY CO., LTD.) 10 August 2016 (2016-08-10) entire document | 1-13 |
| A | CN 115261952 A (QINGHAI INSTITUTE OF SALT LAKES, CHINESE ACADEMY OF SCIENCES) 01 November 2022 (2022-11-01) entire document | 1-13 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 June 2024** | **11 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/137987** |

| C. | DOCUMENTS CONSIDERED TO BE RELEVANT | | |
| --- | --- | --- |
| Category* | Citation of document, with indication, where appropriate, of the relevant passages | Relevant to claim No. |
| A | 郑继伟 等 (ZHENG, Jiwei et al.). "去合金化Mn-Cu合金制备纳米多孔铜及其形貌演化研究 (Preparation and Microstructure Evolution of Nano-porous Copper Through Dealloying of Mn-Cu Alloy)" <br> 热加工工艺 (Hot Working Technology), Vol. 40, No. 24, 25 December 2011 (2011-12-25), ISSN: 1001-3814, <br> pages 40-43 | 1-13 |
| A | ZHANG, Wenjun et al. "Electronic and Geometric Structure Engineering of Bicontinuous Porous Ag-Cu Nanoarchitectures for Realizing Selectivity-Tunable Electrochemical $CO_2$ Reduction" <br> Nano Energy, Vol. 73, 17 April 2020 (2020-04-17), ISSN: 2211-2855, <br> pages 1-12 | 1-13 |

Form PCT/ISA/210 (second sheet) (July 2022)

**INTERNATIONAL SEARCH REPORT**
**Information on patent family members**

International application No.

**PCT/CN2023/137987**

| Patent document cited in search report | | | Publication date (day/month/year) | Patent family member(s) | | | Publication date (day/month/year) |
|---|---|---|---|---|---|---|---|
| US | 2022250352 | A1 | 11 August 2022 | TW | 202231940 | A | 16 August 2022 |
| | | | | US | 11660839 | B2 | 30 May 2023 |
| | | | | CN | 114875264 | A | 09 August 2022 |
| | | | | CN | 114875264 | B | 09 May 2023 |
| CN | 105845459 | A | 10 August 2016 | CN | 105845459 | B | 25 May 2018 |
| CN | 115261952 | A | 01 November 2022 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311278003